# EUROPEAN PATENT SPECIFICATION

(11) **EP 3 992 787 B1**
(45) Date of publication and mention of the grant of the patent: **10.09.2025**
(21) Application number: 20846803.3
(22) Date of filing: 30.07.2020
(51) Int. Cl.: G06F 9/451, G06F 3/04817, G06F 3/0481

(54) **INTERFACE DISPLAY METHOD AND ELECTRONIC DEVICE**
SCHNITTSTELLENANZEIGEVERFAHREN UND ELEKTRONISCHE VORRICHTUNG
PROCÉDÉ D'AFFICHAGE D'INTERFACE ET DISPOSITIF ÉLECTRONIQUE

(30) Priority: 31.07.2019 CN 201910704755
(43) Date of publication of application: 04.05.2022
(73) Proprietor: Huawei Technologies Co., Ltd., Longgang District Shenzhen, Guangdong 518129 (CN)
(72) Inventor: FU, Ruhai, Shenzhen, Guangdong 518129 (CN); HE, Hu, Shenzhen, Guangdong 518129 (CN); HE, Haiming, Shenzhen, Guangdong 518129 (CN)
(74) Representative: Maiwald GmbH
(86) International application number: PCT/CN2020/105850
(87) International publication number: WO 2021/018248

(56) References cited:
- CN-A- 106 648 306
- CN-A- 108 845 734
- CN-A- 109 246 464
- CN-A- 109 889 628
- CN-A- 109 891 862
- CN-B- 105 808 306
- US-A1- 2018 017 996
- ANONYMOUS: "Oppo developing in-screen camera, embedded in app icon - GSMArena.com news", 28 January 2019 (2019-01-28), XP055935720, Retrieved from the Internet <URL:https://www.gsmarena.com/oppo_inscreen_camera_app_icon-news-35254.php> [retrieved on 20220627]
- DEIRDRE O'DONNELL: "New OPPO patents suggest the OEM intends to hide punch-hole camera within on-screen icon - NotebookCheck.net News", 29 January 2019 (2019-01-29), XP055935706, Retrieved from the Internet <URL:https://www.notebookcheck.net/New-OPPO-patents-suggest-the-OEM-intends-to-hide-punch-hole-camera-within-on-screen-icon.401606.0.html> [retrieved on 20220627]
- TECHNOFRILL: "World's first notchless smartphone presented by Oppo", 3 June 2019 (2019-06-03), XP055935867, Retrieved from the Internet <URL:https://www.youtube.com/watch?v=QdJxFDK8UOs> [retrieved on 20220427]
- SCIENCE AND TECHNOLOGY INSTITUTE: "OPPO's new patent is really wonderful, the front camera "digging hole" can be successfully hidden", 28 January 2019 (2019-01-28), pages 1 - 4, XP055887854, Retrieved from the Internet <URL:https://baijiahao.baidu.com/s?id=1623894644916808018&wfr=spider&for=pc>

## Description

### TECHNICAL FIELD

This application relates to the field of terminal technologies, and in particular, to an interface display method and an electronic device.

### BACKGROUND

A full-screen technology is one of the hottest technologies at present. Full-screen mobile phones are loved and pursued by a majority of users. The full-screen technology is a relatively broad definition of design of a mobile phone with an ultra-high screen-to-body ratio in the display industry. Literally, the entire front of the mobile phone is a screen, a display interface of the mobile phone is completely covered by the screen, and no frames are designed at four frame positions of the mobile phone, to seek an ultra-high screen-to-body ratio of approximately 100%.

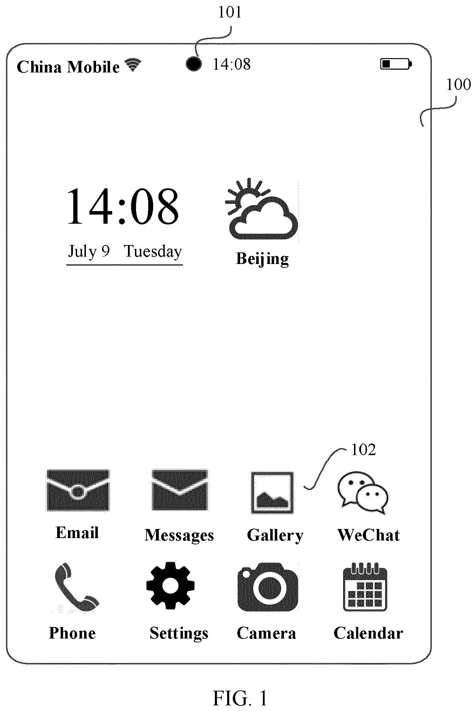

Because other indispensable basic function requirements of a mobile phone need to be met for front-facing sensor interaction components such as a mobile phone front-facing camera, a mobile phone receiver, a distance sensor, and a light sensor, in a process of designing a current full-screen mobile phone, these front-facing sensor interaction components are hidden below a screen, and display areas corresponding to these front-facing sensor interaction components on the display usually have different display effects from another area on the screen. Consequently, a sense of fragmentation may occur on the screen of the mobile phone. As shown in FIG. 1, taking a current hole-punch screen mobile phone as an example, an interface 100 includes a display area 101 in which a front-facing camera is located and a display area 102 in which a plurality of applications and the like are located. Because of the display area 101 in which the front-facing camera is located, a sense of fragmentation occurs in a user interface of the full-screen mobile phone, leading to poor user experience.

Anonymous: "Oppo developing in-screen camera, embed in app icon - GSMArena.com news", 28 January 2019, describes a punch-hole camera app icon interface.

Deirdre O'donnell: "New OPPO patents suggest the OEM intends to hide punch-hole camera within on-screen icon - Notebookcheck.net News", 29 January 2019 describes to hide punch-hole camera within an on-screen icon.

Technofrill: "World's first notchless smartphone presented by Opppo", 3 June 2019, describes a notchless smartphone.

CN 105 808 306 B describes an icon display method. The method comprises the steps that whether a preset transformation condition for icons in a target display region is met currently is judged; if the preset transformation condition is met, standby icons are acquired from a preset icon library; and the icons in the target display region are replaced with the standby icons, wherein the icons in the target display region include status icons in a status bar or virtual key icons in a virtual key bar, the style of the standby icons is different from that of the status icons or the virtual key icons, and the style comprises shapes, sizes and/or colors.

CN 106 648 306 A discloses a method for assisting utilize of terminal equipment and terminal device. The implementation of the method comprises the following: after the terminal device is started, an application icon is displayed on the interface of the terminal device, and the application icon comprises an input interface for indicating instructions; the instruction is received through the input interface; after the terminal device received the instructions, a voice data that is described for the applied icon is obtained; and play the voice data. Through the application icons on the interface of the terminal device, a play button that can perform voice description of the application icon is added to guide users to utilize various applications and functions of the terminal device.

Science and Technology Institute: "OPPO's new patent is really wonderful, the front camera "digging hole" can be successfully hidden", describes that the front camera "digging hole" can be hidden.

In conclusion, how to alleviate the problem of the sense of fragmentation occurring on the screen of the full-screen mobile phone is a technical problem that urgently needs to be resolved at present.

### SUMMARY

This application provides an interface display method and an electronic device, to resolve a problem of a sense of fragmentation on a screen in full-screen display in the conventional technology. The invention is defined by the appended set of claims.

According to a first aspect, an embodiment of this application provides an interface display method. The method may be applied to an electronic device in a full-screen display technology. The full-screen display means that the entire front of the electronic device is a screen, a display interface of the electronic device is completely covered by the screen, and no frames are designed at four frame positions of the electronic device, to seek an ultra-high screen-to-body ratio of approximately 100%. The method specifically includes: first obtaining a first display position of a display shape of a front-facing sensor interaction component on a full-screen display, wherein the first display position comprises a first width range and a first height range that are occupied by the display shape of the front-facing sensor interaction component on the display; then searching a configuration file for a target function icon corresponding to the front-facing sensor interaction component, where the configuration file includes a display position, on the full-screen display, of a function icon corresponding to at least one function in an enabled state, and a second display position of the target function icon on the full-screen display that comprises a second width range and a second height range that are occupied by the target function icon on the display and both a difference between the second width range and the first width range and a difference between the second height range and the first height range fall within specified ranges; and then displaying a processed target function icon on the full-screen display, where the processed target function icon occupies the second display position on the full-screen display, and a display shape of the processed target function icon is the same as the display shape of the front-facing sensor interaction component on the full-screen display.

In the foregoing technical solution, the first display position of the display shape of the front-facing interaction component on the full-screen display is obtained, the configuration file is searched for the target function icon corresponding to the second display position that is the same as or close to the first display position, the shape of the target function icon is processed into a shape that is the same as or similar to that of the front-facing sensor interaction component corresponding to the first display position, and the position of the target function icon on the full-screen display is the same or close to the first display position. In this way, a sense of fragmentation of the full-screen display can be alleviated, and user experience of a user interface of a full-screen mobile phone can be improved.

In the foregoing technical solution, the display position (that is, the width range and the height range that are occupied by the display shape) corresponding to the front-facing sensor interaction component on the full-screen display is the same as or close to the display position of the target function icon on the full-screen display. In this way, the front-facing sensor interaction component does not need to be separately displayed at a corresponding display position. Displaying the target function icon and the front-facing sensor interaction component at a same position or close positions can alleviate a sense of fragmentation of the full-screen display and improve user experience.

In a possible design, the method further comprises: obtaining a color and/or brightness of a user interface currently displayed on the full-screen display; and adjusting a display color and/or display brightness at the first display position to a color and/or brightness that are or is the same as the color and/or the brightness of the user interface currently displayed on the full-screen display.

In a possible design, the front-facing sensor interaction component includes but is not limited to a front-facing camera, a receiver, a light sensor, and a distance sensor.

According to a second aspect, an electronic device is provided. The electronic device includes at least one front-facing sensor interaction component, a full-screen display, one or more processors, a memory, and one or more computer programs. The full-screen display is configured to: display a display shape of the front-facing sensor interaction component on the full-screen display, and display a function icon and/or a text of each function of the electronic device; and the one or more computer programs are stored in the memory, the one or more computer programs include instructions, and when the instructions are invoked and executed by the one or more processors, the electronic device can perform the method described in any one of the first aspect and the possible designs of the first aspect.

According to a third aspect, a computer-readable storage medium is provided. The computer-readable storage medium stores instructions, and when the instructions run on a computer, the computer performs the method in any one of the first aspect and the possible designs of the first aspect.

According to a fourth aspect, a computer program product including instructions is provided. When the computer program product runs on a computer, the computer performs the method in any one of the first aspect and the possible designs of the first aspect.

### BRIEF DESCRIPTION OF DRAWINGS

FIG. 1 is a schematic diagram of an interface of a hole-punch screen mobile phone;
FIG. 2 is a diagram of a structure of a possible electronic device;
FIG. 3 is a schematic diagram of a user interface;
FIG. 4A, FIG. 4B, and FIG. 4C are a schematic diagram of a group of interfaces;
FIG. 5A, FIG. 5B, and FIG. 5C are a schematic diagram of a group of interfaces;
FIG. 6A, FIG. 6B, and FIG. 6C are a schematic diagram of a group of interfaces;
FIG. 7A and FIG. 7B are a schematic diagram of a group of interfaces;
FIG. 8A and FIG. 8B are a schematic diagram of a group of interfaces;
FIG. 9 is a flowchart of an interface display method according to an embodiment of this application;
FIG. 10 is a schematic diagram of an interface ;
FIG. 11 is a flowchart of another interface display method according to an embodiment not encompassed by the wording of the claims; and
FIG. 12 is a schematic diagram of a structure of an electronic device according to an embodiment of this application.

### DESCRIPTION OF EMBODIMENTS

The following further describes in detail the embodiments of this application with reference to the accompanying drawings.

The embodiments of this application may be applied to a plurality of electronic devices. The electronic device may be a portable electronic device with functions of a personal digital assistant, a music player, and/or the like, for example, a mobile phone, a tablet computer, or a wearable device (such as a smart watch) that has a wireless communication function. An example embodiment of the portable electronic device includes but is not limited to a portable electronic device using iOS^{®}, Android^{®}, Microsoft^{®}, or another operating system. Alternatively, the portable electronic device may be another portable electronic device, for example, a laptop (laptop) computer with a touch-sensitive surface (for example, a touch panel). It should be further understood that, in some other embodiments of this application, the electronic device may alternatively be a desktop computer with a touch-sensitive surface (for example, a touch panel), but not a portable electronic device.

In this application, front-facing sensor interaction components include but are not limited to a front-facing camera, a receiver, a light sensor, a distance sensor, and the like. These front-facing sensor interaction components are components with a function of collecting an image, sound, or the like on the front of an electronic device.

Currently, taking a front-facing camera of a mobile phone as an example, the electronic device usually retains a position of the front-facing camera in a simple and crude manner of punching a hole, for example, on a currently used hole-punch screen. Consequently, a user experience effect of a user interface (user interface, UI) is poor, and a strong sense of fragmentation occurs. As shown in FIG. 1, in a display process of a full-screen electronic device, because a problem of a sense of fragmentation of display occurs when some front-facing sensor interaction components are disposed, in the embodiments of this application, some conventional icons that need to be displayed, for example, a battery level icon, an operator signal icon, and an icon indicating that display in a landscape mode is allowed/not allowed for a screen, are used to cover display areas of some front-facing sensor interaction components for display, so that a user cannot feel a sense of fragmentation between the front-facing sensor interaction components and another area, but views some conventional display icons in terms of an overall display effect, thereby improving user experience.

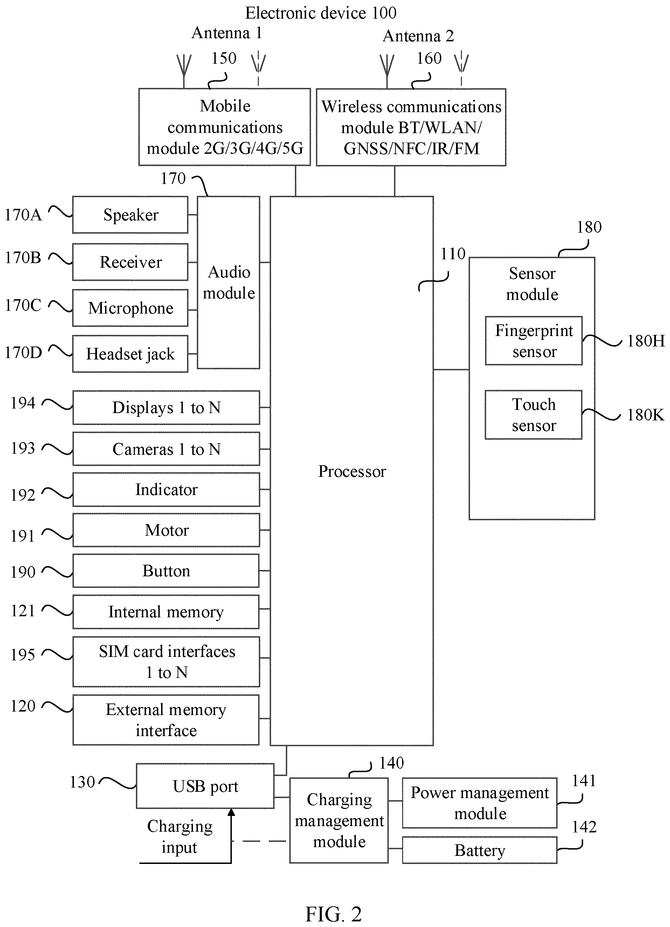

The following first briefly describes a structure of an electronic device to which the embodiments of this application may be applied, so that a person skilled in the art can easily understand a technical solution. For example, as shown in FIG. 2, the following uses the electronic device 100 as an example to specifically describe this embodiment.

The electronic device 100 may include a processor 110, an external memory interface 120, an internal memory 121, a USB port 130, a charging management module 140, a power management module 141, a battery 142, an antenna 1, an antenna 2, a mobile communications module 151, a wireless communications module 152, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (Neural-network Processing Unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access and reduces a waiting time of the processor 110, to improve system efficiency.

The processor 110 can run a prompt information display method provided in the embodiments of this application, to reduce a probability that prompt information is eliminated because of an accidental touch of a user. When different components are integrated into the processor 110, for example, a CPU and the GPU are integrated, the CPU and the GPU may cooperate to perform an interface display method provided in the embodiments of this application.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like. In some embodiments, the electronic device 100 may include one or N displays 194, where N is a positive integer greater than 1. In this embodiment of this application, the display 194 may be one integrated flexible display, or may be a spliced display including two rigid screens and one flexible screen located between the two rigid screens. The display 194 in this embodiment of this application is a full-screen display, in other words, the entire front of the electronic device 100 is the screen, a display interface of the electronic device 100 is completely covered by the screen, no frames are designed at four frame positions of the mobile phone, to seek an ultra-high screen-to-body ratio of approximately 100%. The following embodiments are described by using the display 194. It should be understood that the display 194 herein is a full-screen display.

The camera 193 (a front-facing camera, a rear-facing camera, or a camera that may serve as both a front-facing camera and a rear-facing camera) is configured to capture a static image or a video. Usually, the camera 193 may include photosensitive elements such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, code of an application (for example, a camera application or a WeChat application), and the like. The data storage area may store data (for example, an image or a video collected by the camera application) created during use of the electronic device 100 and the like. The internal memory 121 may further store position information and the like stored in a configuration file in the embodiments of this application.

In addition, the internal memory 121 may include a high-speed random access memory, and may further include a nonvolatile memory, for example, at least one magnetic disk storage device, a flash memory, and a universal flash storage (universal flash storage, UFS).

Certainly, the code of an algorithm provided in this embodiment of this application may alternatively be stored in an external memory. In this case, the processor 110 may run, by using the external memory interface 120, the code that is of the algorithm and that is stored in the external memory, to perform accidental touch prevention processing on a touch operation.

The following describes functions of the sensor module 180.

The gyro sensor 180A may be configured to determine a motion posture of the electronic device 100. In some embodiments, angular velocities of the electronic device 100 around three axes (that is, an x axis, a y axis, and a z axis) may be determined by using the gyro sensor 180A. In other words, the gyro sensor 180A may be configured to detect a current motion state of the electronic device 100, for example, a shaken or static state.

The acceleration sensor 180B may detect accelerations in various directions (usually on three axes) of the electronic device 100. In other words, the gyro sensor 180A may be configured to detect the current motion state of the electronic device 100, for example, the shaken or static state.

The optical proximity sensor 180G may include, for example, a light-emitting diode (LED) and an optical detector such as a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, the mobile phone may determine that there is an object near the mobile phone. When insufficient reflected light is detected, the mobile phone may determine that there is no object near the mobile phone.

The gyro sensor 180A (or the acceleration sensor 180B) may send detected motion status information (for example, an angular velocity) to the processor 110. The processor 110 determines, based on the motion status information, whether the electronic device 100 is currently in a handheld state or a tripod state (for example, when the angular velocity is not 0, it indicates that the electronic device 100 is in the handheld state).

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor 180K. The touch sensor may transfer the detected touch operation to the application processor, to determine a type of the touch event. A visual output related to the touch operation may be provided by using the display 194. In some other embodiments, the touch sensor 180K may alternatively be disposed on a surface of the electronic device 100 at a location different from a location of the display 194.

For example, the display 194 of the electronic device 100 displays a home screen, and the home screen includes icons of a plurality of applications (for example, a camera application and a WeChat application). The user taps the icon of the camera application on the home screen by using the touch sensor 180K, to trigger the processor 110 to open the camera application and turn on the camera 193. The display 194 displays an interface of the camera application, for example, a viewfinder interface. In this embodiment of this application, when the display 194 displays prompt information, the processor 110 performs accidental touch prevention processing on a touch operation received by the touch sensor 180K.

A wireless communication function of the electronic device 100 may be implemented through the antenna 1, the antenna 2, the mobile communications module 151, the wireless communications module 152, the modem processor, the baseband processor, and the like.

The antenna 1 and the antenna 2 are configured to: transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 151 may provide a wireless communication solution that includes 2G/3G/4G/5G or the like and that is applied to the electronic device 100. The mobile communications module 151 may include at least one filter, a switch, a power amplifier, a low noise amplifier (low noise amplifier, LNA), and the like. The mobile communications module 151 may receive an electromagnetic wave through the antenna 1, perform processing such as filtering or amplification on the received electromagnetic wave, and transmit a processed electromagnetic wave to the modem processor for demodulation. The mobile communications module 151 may further amplify a signal modulated by the modem processor, and convert the signal into an electromagnetic wave for radiation through the antenna 1. In some embodiments, at least some functional modules of the mobile communications module 151 may be disposed in the processor 110. In some embodiments, at least some functional modules of the mobile communications module 151 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and then transferred to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communications module 151 or another functional module.

The wireless communications module 152 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 152 may be one or more devices integrating at least one communications processing module. The wireless communications module 152 receives an electromagnetic wave through the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, and convert the signal into an electromagnetic wave for radiation through the antenna 2.

In addition, the electronic device 100 may implement audio functions, for example, music playing and recording, by using the audio module 170, the speaker 170A, the receiver 170B, the microphone 170C, the headset jack 170D, the application processor, and the like. The electronic device 100 may receive an input of the button 190, and generate a key signal input related to a user setting and function control of the electronic device 100. The electronic device 100 may generate a vibration prompt (for example, an incoming call vibration prompt) by using the motor 191. The indicator 192 in the electronic device 100 may be an indicator light, may be configured to indicate a charging status and a power change, and may also be configured to indicate a message, a missed call, a notification, and the like. The SIM card interface 195 in the electronic device 100 is configured to connect to a SIM card. The SIM card may be inserted into the SIM card interface 195 or removed from the SIM card interface 195, to implement contact with or separation from the electronic device 100.

The interface display method provided in the embodiments of this application may be applied to the foregoing electronic device shown in FIG. 2 or an electronic device with a similar function and structure to that in FIG. 2. In other words, the method may be performed by each hardware part of the electronic device in combination with a corresponding software program.

In the descriptions of the embodiments of this application, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise stated, "a plurality of" means two or more.

It should be noted that the front-facing camera is described as an example in the following descriptions of the embodiments of this application. This is not limited in this application. For example, another front-facing sensor interaction component such as a sensor may be used.

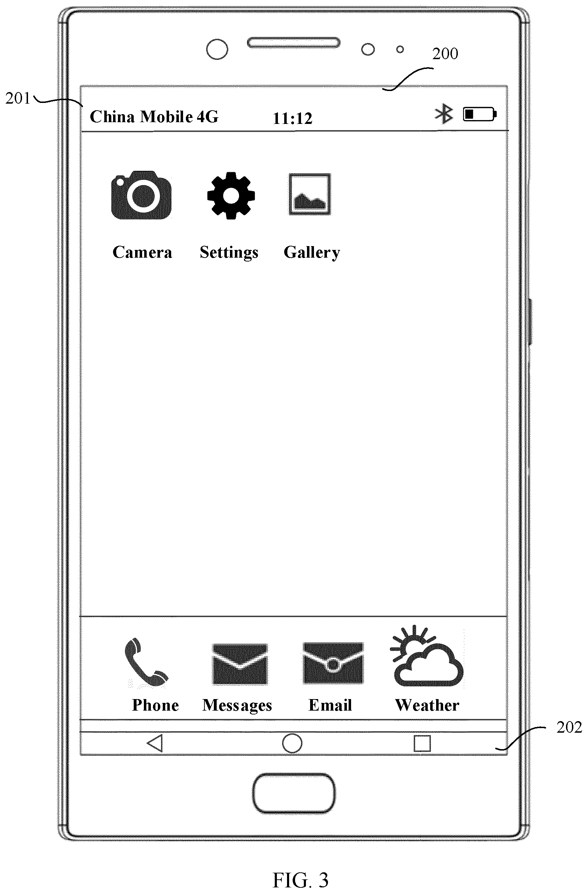

As shown in FIG. 3, the display 194 of the electronic device 100 displays a user interface 200. The user interface may include a status bar 201 and a navigation bar 202. The status bar 201 may further include an operator name (for example, China Mobile) icon, a mobile network (for example, 4G) icon, a Bluetooth icon, a time icon, a remaining power icon, and the like. In addition, it may be understood that in some other embodiments, the status bar 201 may further include a Wi-Fi icon, an external device icon, and the like. The navigation bar 202 may include a back button (back button) icon, a home button (home button) icon, a menu button (menu button) icon, and the like. It should be noted that the navigation bar 202 is a hidable area, and the navigation bar 202 may also be referred to as a virtual button area. In this embodiment of this application, the status bar 201 and the navigation bar 202 that are included in the user interface 200 displayed on the display 194 of the electronic device 100 may be understood as a function independent area in the user interface 200.

A full-screen mobile phone in the embodiments of this application is a full-screen mobile phone whose front-facing sensor interaction component is below a screen, in other words, an area corresponding to the front-facing sensor interaction component on the screen is a displayable area.

For example, an electronic device is a mobile phone, and a camera is a front-facing camera. On current full-screen mobile phones, front-facing cameras are generally placed in screen structures by using hole-punch screens. This design of a hardware structure provides a user with a relatively poor perception effect. In the embodiments of this application, multiplexing may be performed on a display area of the front-facing camera on the screen and a function independent area on the screen, which may also mean that the hardware structure of the mobile phone is designed, so that the display area corresponding to the front-facing camera can be displayed in the function independent area on the screen.

It should be noted that, in an actual application, a position of the front-facing sensor interaction component usually needs to be adjusted by matching a position of a function icon or a text in a user interface.

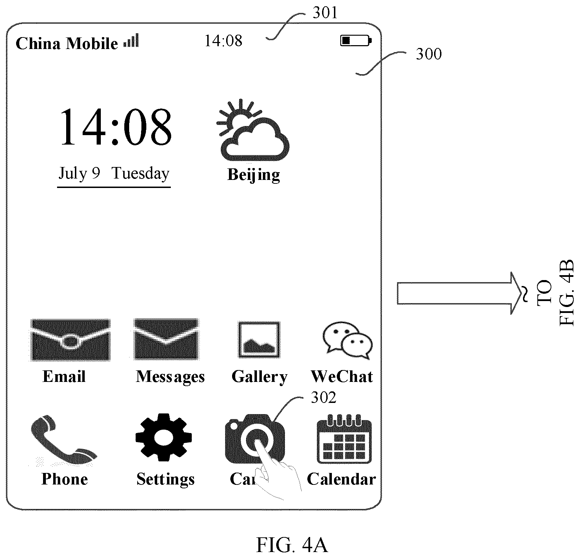

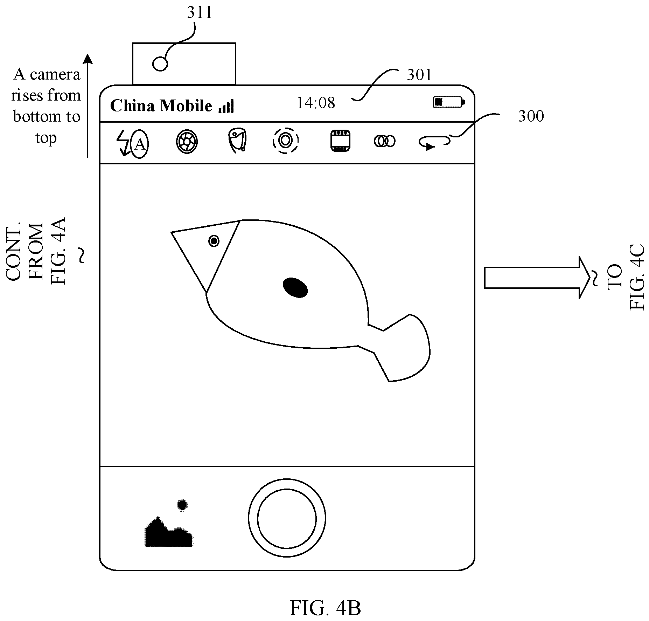

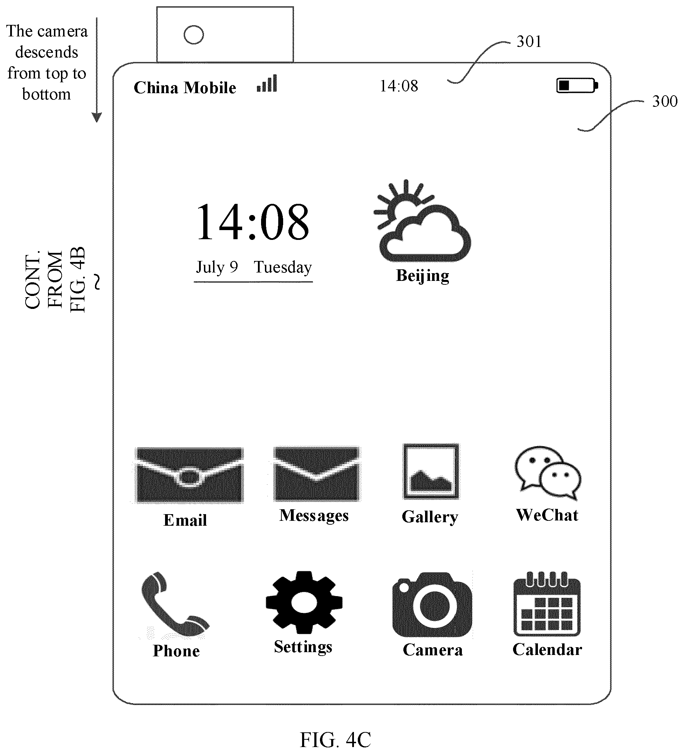

In some embodiments, when the display area corresponding to the front-facing camera is displayed in a status bar area and the mobile phone is in a portrait mode, as shown in FIG. 4A, FIG. 4B, and FIG. 4C, a user interface 300 includes a status bar 301 and application icons such as a camera icon 302 and other application icons, and the status bar area includes an operator name (such as China Mobile) icon, a mobile network signal icon, and a power information icon, and the like. In this case, the front-facing camera of the mobile phone may be implemented by using a pop-up camera. In an example, assuming that a user needs to perform photographing, when the user taps the camera icon 302, the mobile phone may control, in response to a first operation (for example, the tap operation) of the user, a front-facing camera 311 to rise from bottom to top from the inside of the mobile phone, and then a framing interface 310 may be displayed on the display of the mobile phone. In addition, after the user completes the photographing operation, assuming that the user performs a second operation of exiting a camera application, the mobile phone may enable, in response to the second operation of the user, the front-facing camera 311 to descend from top to bottom to the inside of the mobile phone and hide, and the mobile phone returns to the user interface 300.

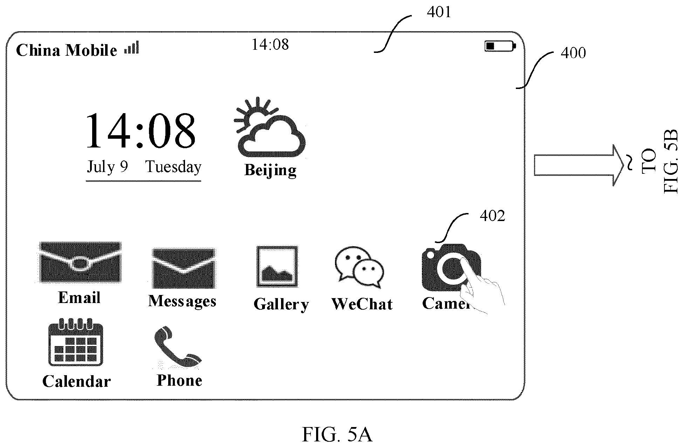

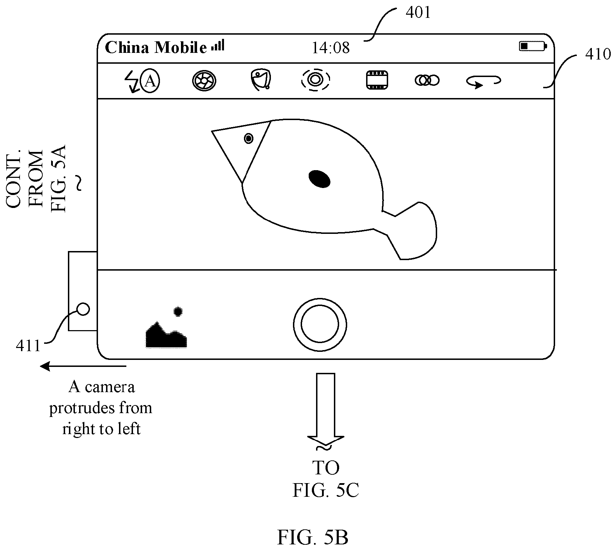

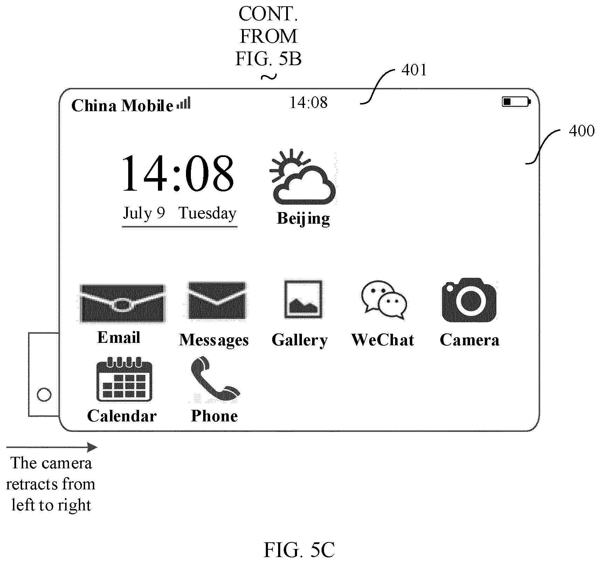

As shown in FIG. 5A, FIG. 5B, and FIG. 5C, when the mobile phone is in a landscape mode, a user interface 400 may be displayed on the display of the mobile phone. The user interface 400 may include a status bar 401 and an application icon area, and the application icon area includes a camera icon 402. Assuming that the user needs to perform photographing, the user may tap the camera icon 402 in the landscape mode, the mobile phone may control, in response to the tap operation of the user, a front-facing camera 411 to protrude from right to left from the inside of the mobile phone, and a framing interface 410 may be displayed on the display of the mobile phone. After the user completes the photographing operation, the mobile phone may enable, in response to an operation of exiting the camera application that is performed by the user, the front-facing camera 411 to retract from left to right to the inside of the mobile phone and hide, and the mobile phone returns to the user interface 400.

It may be understood that, in the foregoing embodiment, for the electronic device, user interfaces in the landscape mode and the portrait mode are the same, and only pop-up directions of the front-facing camera in the landscape mode and the portrait mode are different.

Based on the descriptions in the foregoing embodiment, for front-facing sensor interaction components such as a front-facing camera, a mobile phone receiver, a distance sensor, and a light sensor, these front-facing sensor interaction components may be disposed in space inside a mobile phone in the embodiments of this application. When a front-facing sensor interaction component needs to be used, an icon on the mobile phone may be correspondingly controlled or another instruction form may be used, to trigger the corresponding front-facing sensor interaction component to pop out of the mobile phone. After the front-facing sensor interaction component is used, an icon on the mobile phone is correspondingly controlled or another instruction form is used, to trigger the corresponding front-facing sensor interaction component to retract or hide inside the mobile phone. In this way, positions at which these front-facing sensor interaction components are disposed do not need to be avoided in a full-screen display interface, so that user experience of a user interface of the full-screen mobile phone is improved, and a sense of fragmentation is alleviated.

Certainly, it may be understood that the foregoing embodiments are merely described by using a status bar as an example. A corresponding adjustment may be alternatively made based on a task bar, a virtual button area, or the like in this application. Details are not described herein.

In another embodiment of this application, in addition to the foregoing described hardware design of the electronic device, an icon, a text, or the like displayed in an function- independent area may also be designed in software, so that a display area corresponding to the front-facing sensor interaction component can be displayed in some existing icons or texts in the function independent area, thereby alleviating a sense of fragmentation of the screen and improving user experience.

For ease of description, the display area corresponding to the front-facing interaction component is denoted as a special display area below. Because there are a plurality of display manners of an icon and a text of a specified function, in the embodiments of this application, the icon and the text of the specified function may be redesigned based on characteristics such as a shape and performance of the special display area.

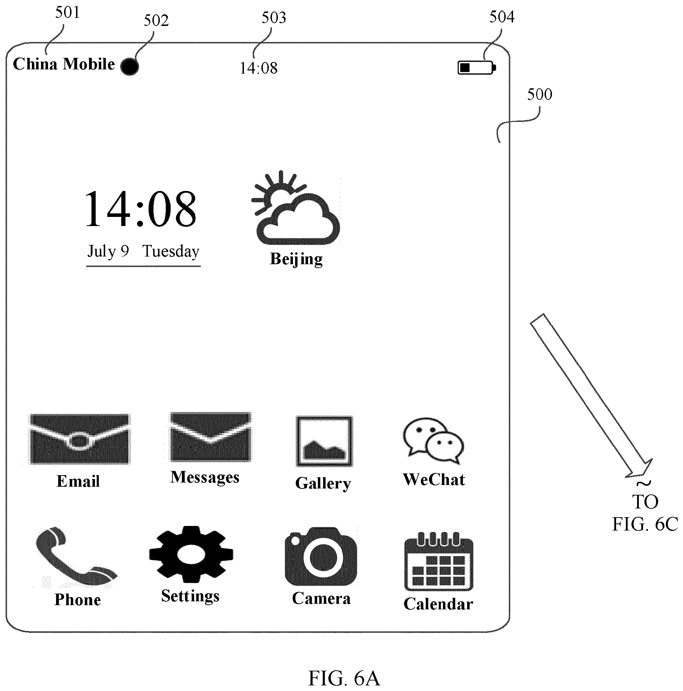

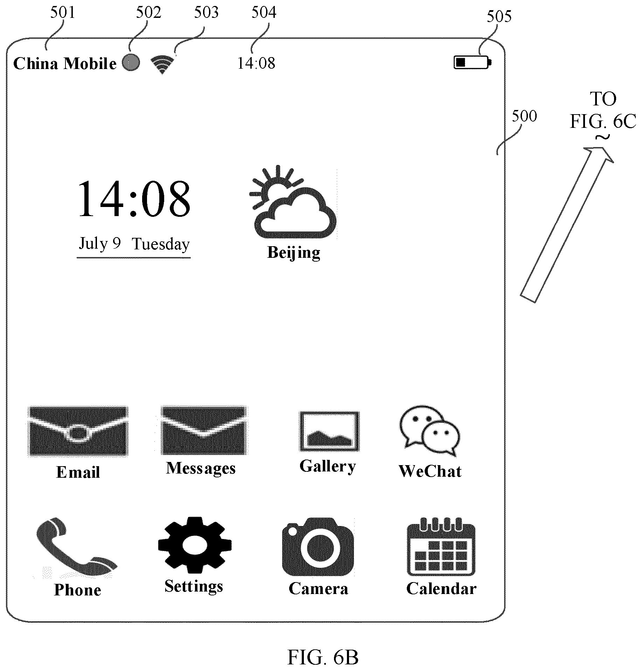

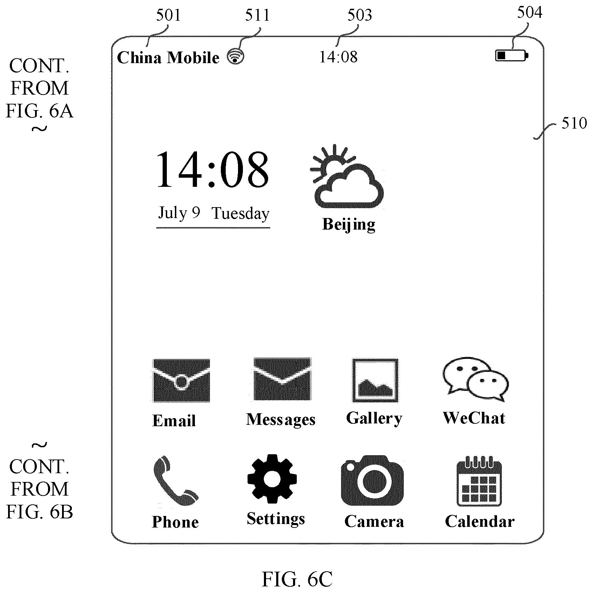

In some embodiments of this application, the electronic device 100 may set, based on a position of the display area corresponding to the front-facing sensor interaction component on the display of the electronic device 100, a display manner of an icon displayed on a status bar. In an example, descriptions are provided by using an example in which the front-facing sensor interaction component is a front-facing camera and the mobile phone is in the portrait mode. As shown in FIG. 6A, FIG. 6B, and FIG. 6C, assuming that the mobile phone is a current hole-punch screen mobile phone, a user uses one SIM card on the mobile phone, and wireless fidelity (wireless fidelity, Wi-Fi) is not connected, a user interface 500 of the mobile phone shown in FIG. 6A may include icons in a status bar area. For example, the icons may be an operator name (China Mobile) icon 501, a front-facing camera icon 502, a time information icon 503, and a power information icon 504 that are sequentially displayed from left to right.

The electronic device 100 first obtains position information corresponding to the front-facing camera on the screen, and then searches, based on the position information corresponding to the front-facing camera on the screen and position information of function icons on the status bar that correspond to different functions of the electronic device in an enabled state and/or a disabled state, a configuration file of the electronic device 100 for a corresponding icon that is on the status bar and that corresponds to the position information corresponding to the front-facing camera on the screen. Assuming that the position information corresponding to the front-facing camera on the screen is position information of a Wi-Fi signal icon on the status bar on the screen in a Wi-Fi enabled state, in this embodiment of this application, after Wi-Fi is enabled, the electronic device 100 may display the Wi-Fi signal icon by using an icon 511 in a user interface 510 shown in FIG. 6C. Because a shape that is of the front-facing camera and that is displayed on the screen is usually a circle, the Wi-Fi signal icon may also be displayed in a same or similar shape, in other words, an existing Wi-Fi signal icon is modified or adjusted based on the shape that is of the front-facing camera and that is displayed on the screen to obtain the icon 511 in the special display area. It can be learned that there is a relatively slight sense of fragmentation between the icon 511 and other icons in a surrounding display area as a whole, so that user experience is improved.

In another example, assuming that a user uses one SIM card on the mobile phone, and Wi-Fi is connected, a user interface 500 of the mobile phone may be shown in FIG. 6B, in other words, icons in an included status bar are sequentially an operator name (China Mobile) icon 501, a front-facing camera icon 502, a Wi-Fi signal icon 503, and a time information icon 504, and a power information icon 505 from left to right. In this embodiment of this application, the electronic device 100 first obtains position information corresponding to the front-facing camera on the screen, and then searches, based on the position information corresponding to the front-facing camera on the screen and position information of a function icon that is on the status bar and that corresponds to a currently enabled function of the electronic device, a configuration file of the electronic device 100 for a function icon adjacent or close to the position information corresponding to the front-facing camera on the screen. Assuming that the position information corresponding to the front-facing camera on the screen is adjacent to position information corresponding to the Wi-Fi signal icon on the screen, in this embodiment of this application, the Wi-Fi signal icon 503 may also be displayed by using an icon 511 in a user interface 510 shown in FIG. 6C, namely, a Wi-Fi signal icon 511 in the user interface 510 shown in FIG. 6A, FIG. 6B, and FIG. 6C.

It may be understood that the position information may be understood as coordinate area information. Therefore, a position area corresponding to the front-facing camera on the screen may be less than or equal to a position area corresponding to the Wi-Fi signal icon on the screen.

It should be noted that the configuration file of the electronic device 100 may store position information, on the screen, of displaying an icon corresponding to each function of the electronic device 100 when the function is in an enabled state, and the position information may include position information of fixed functions in an enabled state, for example, time information and power information, and may also include corresponding position information of displaying each function on the screen when at least one function is enabled, for example, position information of an icon displayed on the status bar when Bluetooth is enabled and Wi-Fi is disabled and position information of a function icon displayed on the status bar when Bluetooth and Wi-Fi are enabled. It may be understood that the position information may be stored in the configuration file in a form of a list. This is not limited in this application.

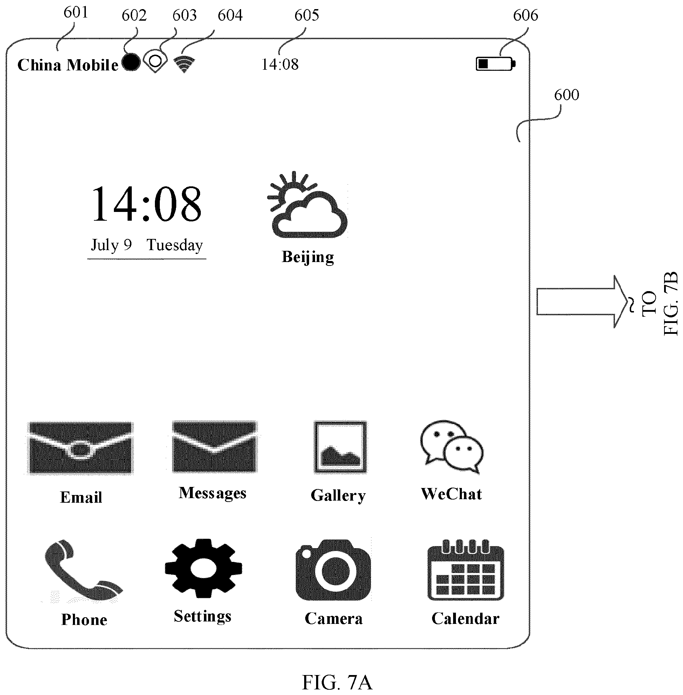

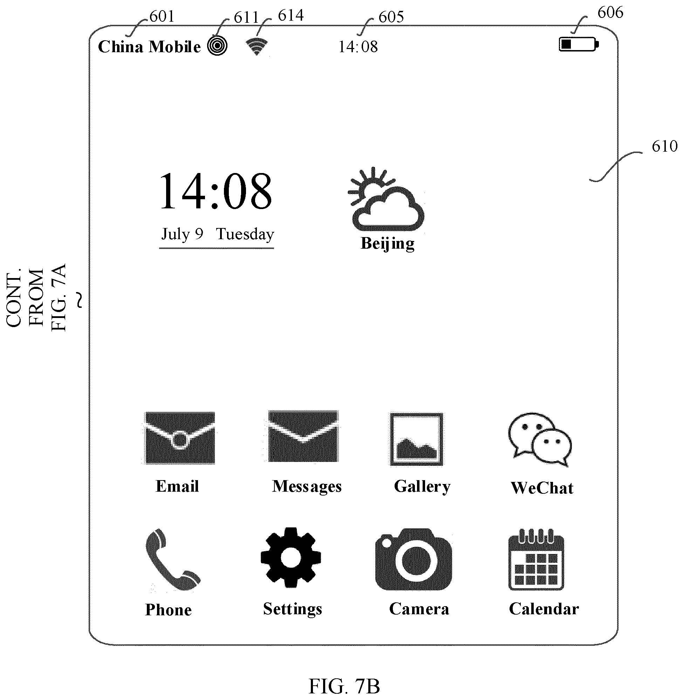

In another example, assuming that a user uses one SIM card on the mobile phone, Wi-Fi is connected, and a global positioning system (global positioning system, GPS) is enabled, a user interface 600 shown in FIG. 7A and FIG. 7B may include a status bar, and specifically, the status bar may sequentially display an operator name (China Mobile) icon 601, a front-facing camera icon 602, a GPS icon 603, a Wi-Fi signal icon 604, a time information icon 605, and a power information icon 606 from left to right. The electronic device 100 first obtains position information corresponding to the front-facing camera on the screen, and then searches, based on the position information corresponding to the front-facing camera on the screen and position information, on the screen, of a function icon corresponding to each currently enabled function of the electronic device, a configuration file of the electronic device 100 for a function icon adjacent to or close to the position information corresponding to the front-facing camera on the screen. Assuming that the position information corresponding to the front-facing camera on the screen is adjacent to position information corresponding to the GPS icon 603 on the screen, the GPS icon 603 may be displayed by using a GPS icon 611 in a user interface 610 shown in FIG. 7A and FIG. 7B. Because a shape that is of the front-facing camera and that is displayed on the screen is usually a circle, an existing displayed GPS icon may also be processed into a shape that is the same as or similar to a circle, and displayed at a position of the icon 602 that is of the front-facing camera and that is displayed on the screen, so that there is a relatively slight sense of fragmentation between the icon 611 in the special display area and other icons in a surrounding display area as a whole, thereby improving user experience.

Certainly, it may be understood that, alternatively, the electronic device 100 first obtains position information corresponding to the front-facing camera on the screen, and then searches, based on the position information corresponding to the front-facing camera on the screen and position information of a function icon corresponding to each function of the electronic device in an enabled state, a configuration file of the electronic device 100 for a function icon within the position information corresponding to the front-facing camera on the screen. For example, if the GPS is not enabled on the mobile phone, when it is found that the position information of the front-facing camera is position information displayed on the status bar when the GPS is in an enabled state, in this embodiment of this application, after the GPS is enabled, the GPS icon 611 in the user interface 610 shown in FIG. 7A and FIG. 7B may be displayed, so that a sense of fragmentation of display that is caused by the icon 602 in the user interface 600 is avoided, and user experience is better.

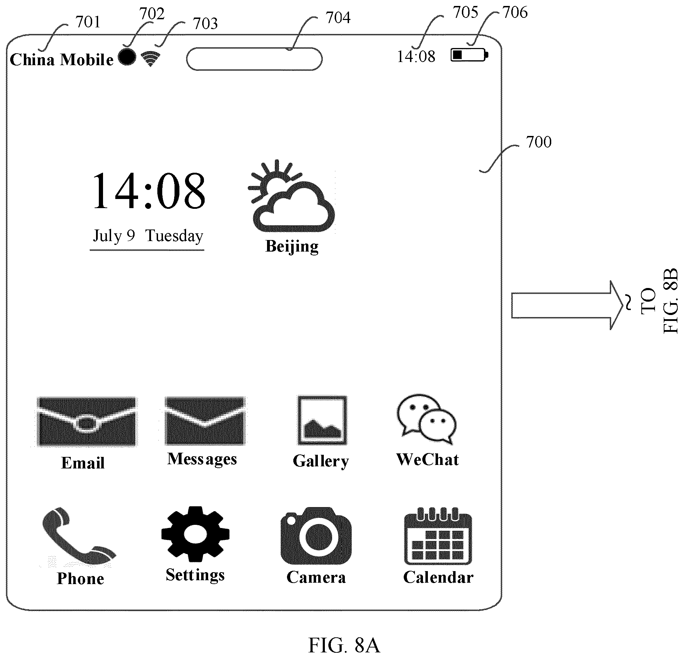

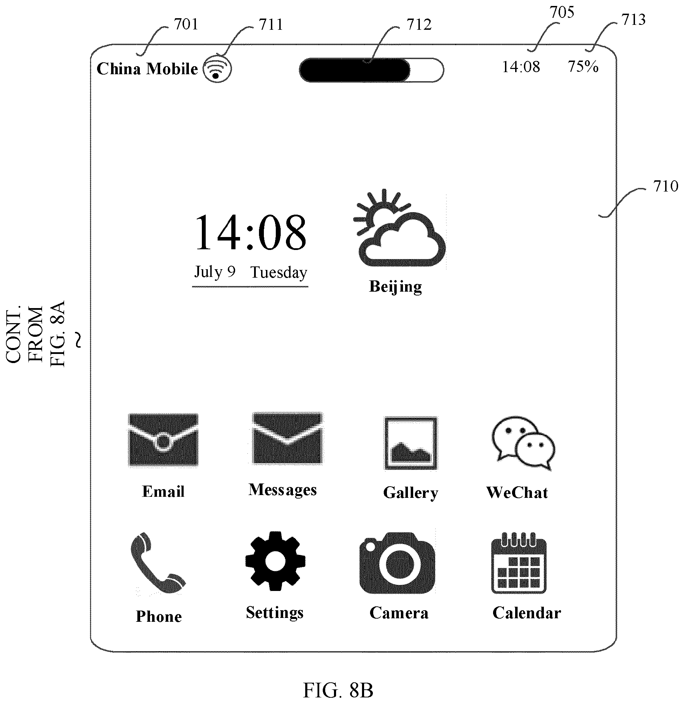

In some other embodiments of this application, the electronic device 100 may also obtain shape information of the front-facing sensor interaction component, and set, based on the shape information of the front-facing sensor interaction component, a display manner of an icon displayed on the status bar. As shown in FIG. 8A and FIG. 8B, assuming that a user uses one SIM card on the mobile phone and Wi-Fi is connected, a user interface 700 may be displayed on the display of the mobile phone. A status bar in the user interface 700 may sequentially display an operator name (China Mobile) icon 701, a front-facing camera icon 702, a Wi-Fi signal icon 703, a receiver icon 704, a time information icon 705, and a power icon 706 from left to right. A shape of the front-facing camera icon 702 is usually a circle, and a shape of the receiver icon 704 may be understood as a rectangle. The Wi-Fi signal icon 703 may be displayed in a shape of a circle, and the battery level icon 706 may be displayed in a shape of a rectangle. Therefore, in this embodiment of this application, the circular Wi-Fi signal icon 703 may be displayed at a position of the front-facing camera, and the rectangular power icon 706 may be displayed at a position of the receiver. For example, referring to a user interface 710 shown in FIG. 8A and FIG. 8B, the operator name (China Mobile) icon 701, a Wi-Fi signal icon 711, a power icon 712, the time information icon 705, and a power information icon 713 are sequentially displayed on a status bar in the user interface 710 from left to right. Certainly, it may be understood that, alternatively, the power information icon 713 may not be displayed. It should be noted that a blank area shown in the power icon 712 in the user interface 710 shown in FIG. 8A and FIG. 8B is power consumed, and a black area (the black area may be alternatively a green area, a yellow area, or the like in actual use, and this is not limited this embodiment of this application) is current remaining power of the electronic device.

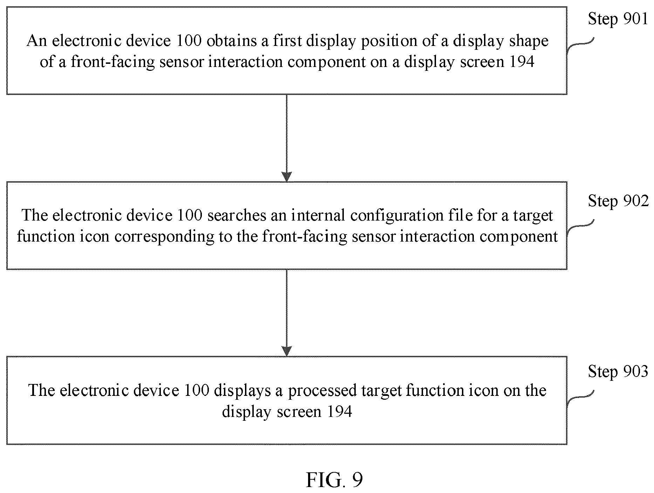

Based on the foregoing embodiments, an embodiment of this application provides an interface display method. A structure of an electronic device in the method may be the diagram of the structure of the electronic device 100 shown in FIG. 2. As shown in FIG. 9, the method includes the following steps.

Step 901: The electronic device 100 obtains a first display position of a display shape of a front-facing sensor interaction component on the display 194. In this embodiment of this application, the first display position of the display shape of the front-facing sensor interaction component on the display includes a first width range and a first height range that are occupied by the display shape of the front-facing sensor interaction component on the display. Specifically, the front-facing sensor interaction component may include a front-facing camera, a receiver, a light sensor, and a distance sensor, or the like. The front-facing sensor interaction component is not limited to the foregoing components. This is not limited in this application.

Step 902: The electronic device 100 searches an internal configuration file for a target function icon corresponding to the front-facing sensor interaction component. A second display position of a target function icon on the display 194 may be the same as or close to the first display position of the front-facing sensor interaction component on the display 194. The configuration file includes a display position, on the display, of a function icon corresponding to at least one function in an enabled state.

The second display position includes a second width range and a second height range that are occupied by the target function icon on the display. Both a difference between the second width range and the first width range and a difference between the second height range and the first height range fall within specified ranges.

Step 903: The electronic device 100 displays a processed target function icon on the display 194.

In a possible implementation, the electronic device 100 may process the target function icon. A display position of the processed target function icon is the same as or close to the first display position, and a display shape of the processed target function icon is the same as or similar to the display shape of the front-facing sensor interaction component on the display 194.

Further, in this embodiment of this application, to alleviate a sense of fragmentation between a special display area and a surrounding area, brightness of an icon or a text displayed in a function independent area may be adjusted, a color of a function icon may be adjusted, or both brightness and a color of a function icon may be adjusted.

In some embodiments of this application, when a color and/or brightness of a signal icon or a text is adjusted, an adjustment may be made based on a background color and/or background brightness on the screen of the electronic device. For example, a specific adjustment range may be set based on a background color and/or background brightness on a screen of a mobile phone, and then an adjustment is made within the specified adjustment range. Certainly, it may be understood that an adjustment manner is not limited to the foregoing manner. This is not limited in this application.

When the electronic device is in a portrait mode, in an example, assuming that position information corresponding to the front-facing camera on the screen falls within a position range in which a Wi-Fi signal icon is located after Wi-Fi is enabled, to alleviate the sense of fragmentation between the special display area and the surrounding area, in this embodiment of this application, brightness of a Wi-Fi signal icon may be adjusted, a color of a Wi-Fi signal icon may be adjusted, or both brightness and a color of a Wi-Fi signal icon may be adjusted. FIG. 6A, FIG. 6B, and FIG. 6C are used as an example. Assuming that the Wi-Fi signal icon 511 in the user interface 510 is white, and a current background color of the mobile phone is blue, a color of the Wi-Fi signal icon 511 may be adjusted from white to blue or to a color relatively similar to blue. In this way, a user may feel a slighter sense of fragmentation in terms of an overall effect of the screen.

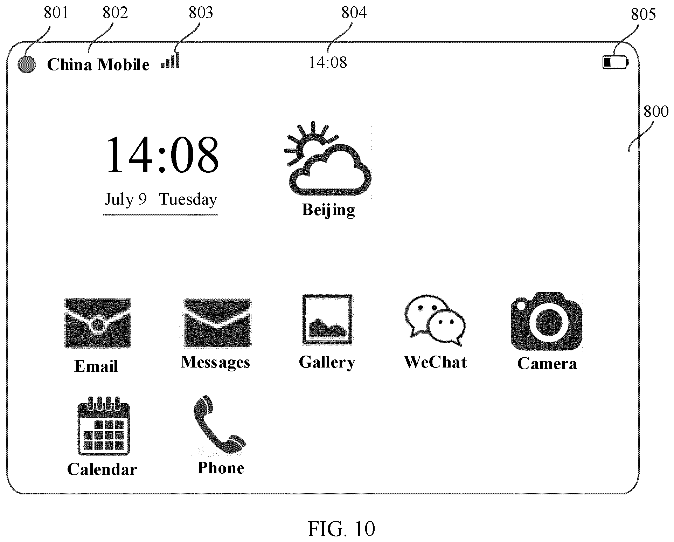

When the electronic device is in a landscape mode, as shown in FIG. 10, a status bar included in a user interface 800 may sequentially display a front-facing camera icon 801, an operator name (China Mobile) icon 802, a mobile network icon 803, a time information icon 804, and a power icon 805 from left to right. It is assumed that a position of the front-facing camera is a position at an upper left corner in the landscape mode (namely, a position at an upper right corner in the portrait mode). In an example, assuming that position information corresponding to the front-facing camera on the screen is adjacent to a position of the operator name (for example, China Mobile) icon, to alleviate the sense of fragmentation between the special display area and the surrounding area, in this embodiment of this application, brightness of the front-facing camera icon 801, the China Mobile icon 802, and the like may be adjusted, colors of the front-facing camera icon 801 and the China Mobile icon 802 may be adjusted, or both brightness and a color of the China Mobile icon 802 may be adjusted. For example, if a current background color of the mobile phone is green, a color of the front-facing camera icon 801 and two words of China Mobile may be adjusted to green or a color relatively similar to green, and brightness of the front-facing camera icon 801 and the two words of China Mobile may be enhanced, to alleviate a sense of incongruousness of a display area corresponding to the front-facing camera.

In some other embodiments of this application, brightness and/or a color of a display area corresponding to the front-facing camera may be adjusted. The front-facing camera 502 in the user interface 500 shown in FIG. 6A, FIG. 6B, and FIG. 6C is used as an example. A display area corresponding to the front-facing camera 502 is black on the screen of the mobile phone. Assuming that a background color of the mobile phone is yellow, a color of the display area corresponding to the front-facing camera 502 may be adjusted to yellow or a similar color.

Further, in a possible design, a status bar is used as an example. When the special display area is displayed in a status bar area, in this embodiment of this application, icons or texts in the status bar area may be displayed in corresponding colors in a color gradient manner based on a sequence of the icons or the texts on the status bar, for example, may be displayed from dark to light. FIG. 7A and FIG. 7B are used as an example. Assuming that a background color of the user interface 610 is a gradient color that gradually changes from dark to light from left to right, a color of the Chinese mobile icon 601 may be set to be the darkest, a color of the GPS icon 611 may be set to be the second darkest, and by analogy, a color of the battery information icon 606 is the lightest. In this way, a sense of fragmentation is slighter in terms of an overall effect on the screen, so that user experience is better.

In another possible design, icons or texts in a status bar area may be alternatively displayed in a brightness gradient manner. For example, brightness of icons in a status bar area included in the user interface 610 shown in FIG. 7A and FIG. 7B may gradually change from low to high. In this way, a sense of incongruousness of the display area corresponding to the front-facing camera relative to another area can be alleviated.

In still another possible design, icons or texts in a status bar area may be alternatively displayed in a color and brightness gradient manner. Taking FIG. 7A and FIG. 7B as an example, corresponding colors and brightness of the operator name (China Mobile) icon 601, the GPS icon 611, a Wi-Fi signal icon 614, the time information icon 605, and the battery level icon 606 that are included in the user interface 610 may be adjusted from left to right. For example, the colors may be set to gradually change from dark to light, and the brightness may be set to gradually change from low to high.

Certainly, it may be understood that both the brightness adjustment manner and the color adjustment manner in the foregoing embodiments are described by using examples. In this application, an adjustment may be made in another manner. This is not limited herein. In addition, the display manner in the foregoing embodiment is merely described by using an example of the display area corresponding to the front-facing camera. A display processing process of a display area of another front-facing sensor interaction component is similar to a processing process of the display area corresponding to the front-facing camera, and details are not described herein again.

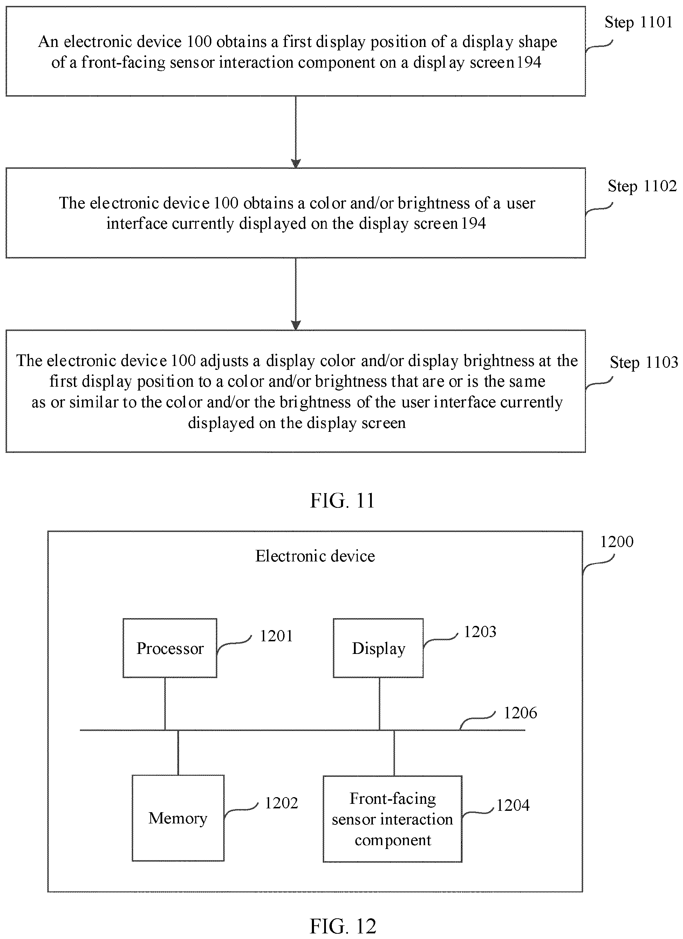

Further, an embodiment of this application provides an interface display method. A structure of an electronic device in the method may be the diagram of the structure of the electronic device 100 shown in FIG. 2. As shown in FIG. 11, the method includes the following steps.

Step 1101: The electronic device 100 obtains a first display position of a display shape of a front-facing sensor interaction component on the display 194.

Step 1102: The electronic device 100 obtains a color and/or brightness of a user interface currently displayed on the display 194. There is no sequence of performing step 1101 and step 1102. In this embodiment of this application, step 1101 may be performed before step 1102, step 1102 may be performed before step 1101, or step 1101 and step 1102 may be performed simultaneously.

Step 1103: The electronic device 100 adjusts a display color and/or display brightness at the first display position to a color and/or brightness that are or is the same as or similar to the color and/or the brightness of the user interface currently displayed on the display.

Based on the foregoing embodiments, an embodiment of this application further provides an electronic device, and the electronic device is configured to implement the interface display method in the figures. As shown in FIG. 12, an electronic device 1200 may include one or more processors 1201, one or more memories 1202, a display 1203, at least one front-facing sensor interaction component 1204, and one or more computer programs. The one or more computer programs are stored in the one or more memories 1202 (not shown in the figure), and the foregoing components may be coupled by using one or more communications buses 1206. The display 1203 is a full-screen display, and is configured to: display a display shape of the front-facing sensor interaction component 1204 on the full-screen display, and display a function icon and/or a text of each function of the electronic device. Certainly, the display 1203 may further display an icon of each application installed in the electronic device, a user interface when an application is opened, or the like.

The memory 1202 stores one or more computer programs, and the one or more computer programs include instructions. The processor 1201 invokes the instructions stored in the memory 1202, so that the electronic device 1200 can execute the foregoing method embodiments shown in FIG. 4A, FIG. 4B, and FIG. 4C to FIG. 11.

In this embodiment of this application, the processor 1201 may be a general-purpose processor, a digital signal processor, an application-specific integrated circuit, a field programmable gate array or another programmable logic device, a discrete gate or a transistor logic device, or a discrete hardware component, and can implement or perform the methods, steps, and logical block diagrams disclosed in the embodiments of this application. The general-purpose processor may be a microprocessor or any conventional processor or the like. The steps of the method disclosed with reference to the embodiments of this application may be directly performed by using a hardware processor, or may be performed by using a combination of hardware in the processor and a software module. The software module may be located in the memory 1202, and the processor 1201 reads program instructions in the memory 1202 and completes the steps in the foregoing methods in combination with hardware of the processor 1201.

In this embodiment of this application, the memory 1202 may be a non-volatile memory such as a hard disk drive (hard disk drive, HDD) or a solid-state drive (solid-state drive, SSD), or may be a volatile memory (volatile memory) such as a RAM. The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store instructions and/or data.

It may be clearly understood by a person skilled in the art that for convenience and brevity of description, for a specific working process of the electronic device 1200 shown in FIG. 12 after the embodiments of the present invention are implemented, refer to a corresponding process in the foregoing method embodiments, and details are not described herein again. For a more detailed structure and function of the electronic device 1200, refer to the foregoing detailed descriptions in the embodiment shown in FIG. 2.

Based on the foregoing embodiments, this application further provides a computer storage medium. The computer storage medium stores a computer program, and when the computer program is executed by a computer, the computer executes the foregoing method embodiments shown in FIG. 4A, FIG. 4B, and FIG. 4C to FIG. 11.

An embodiment of this application further provides a computer program product, including instructions. When the computer program product runs on a computer, the computer executes the foregoing method embodiments shown in FIG. 4A, FIG. 4B, and FIG. 4C to FIG. 11.

The embodiments of this application are described with reference to the flowcharts and/or block diagrams of the method, the device (system), and the computer program product according to the embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. An interface display method, applied to a full-screen display electronic device, and comprising:
obtaining (S901) a first display position of a display shape of a front-facing sensor interaction component on a full-screen display, wherein the first display position comprises a first width range and a first height range that are occupied by the display shape of the front-facing sensor interaction component on the display;
searching (S902), based on the first display position on the full-screen display, a configuration file for a target function icon corresponding to the front-facing sensor interaction component, wherein the configuration file comprises a display position, on the full-screen display, of a function icon corresponding to at least one function in an enabled state, and a second display position of the target function icon on the full-screen display that comprises a second width range and a second height range that are occupied by the target function icon on the display and both a difference between the second width range and the first width range and a difference between the second height range and the first height range fall within specified ranges; and
displaying (S903) a processed target function icon on the full-screen display, wherein the processed target function icon occupies the second display position on the full-screen display, and a display shape of the processed target function icon is the same as the display shape of the front-facing sensor interaction component on the full-screen display.

2. The method according to claim 1, wherein the front-facing sensor interaction component comprises a front-facing camera, a receiver, a light sensor, and a distance sensor.

3. The method according to claim 1 or 2, further comprising:
obtaining a color and/or brightness of a user interface currently displayed on the full-screen display; and
adjusting a display color and/or display brightness at the first display position to a color and/or brightness that are or is the same as the color and/or the brightness of the user interface currently displayed on the full-screen display.

4. An electronic device (100), wherein the electronic device comprises at least one front-facing sensor interaction component (101), a full-screen display, one or more processors (110), a memory (120), and one or more computer programs, wherein
the full-screen display is configured to: display a display shape of the front-facing sensor interaction component on the full-screen display, and display a function icon and/or a text of each function of the electronic device; and the one or more computer programs are stored in the memory, the one or more computer programs comprise instructions, and when the instructions are invoked and executed by the one or more processors, the electronic device performs the following steps:
obtaining a first display position of the display shape of the front-facing sensor interaction component on the full-screen display, wherein the first display position comprises a first width range and a first height range that are occupied by the display shape of the front-facing sensor interaction component on the display;
searching, based on the first display position on the full-screen display, a configuration file for a target function icon corresponding to the front-facing sensor interaction component, wherein the configuration file comprises a display position, on the full-screen display, of a function icon corresponding to at least one function in an enabled state, and a second display position of the target function icon on the full-screen display that comprises a second width range and a second height range that are occupied by the target function icon on the display, and both a difference between the second width range and the first width range and a difference between the second height range and the first height range fall within specified ranges; and
displaying a processed target function icon on the full-screen display, wherein a display position of the processed target function icon occupies the second display position on the full-screen display and a display shape of the processed target function icon is the same as the display shape of the front-facing sensor interaction component on the full-screen display.

5. The electronic device according to claim 4 wherein the front-facing sensor interaction component comprises a front-facing camera, a receiver, a light sensor, and a distance sensor.

6. The electronic device according to claim 4 or 5, when the instructions are invoked and executed by the one or more processors, the electronic device further performs the following steps:
obtaining a color and/or brightness of a user interface currently displayed on the full-screen display; and
adjusting a display color and/or display brightness at the first display position to a color and/or brightness that are or is the same as the color and/or the brightness of the user interface currently displayed on the full-screen display.

7. A computer storage medium, comprising computer instructions, wherein when the computer instructions are run on an electronic device, the electronic device is enabled to perform the interface display method according to any one of claims 1 to 3.

8. A program product, wherein when the program product runs on a computer, the computer is enabled to perform the interface display method according to any one of claims 1 to 3.

## Patentansprüche

1. Schnittstellenanzeigeverfahren, das auf eine elektronische Vorrichtung mit Vollbildanzeige angewendet wird und umfasst:
Erhalten (S901) einer ersten Anzeigeposition einer Anzeigeform einer nach vorne gerichteten Sensorinteraktionskomponente auf einer Vollbildanzeige, wobei die erste Anzeigeposition einen ersten Breitenbereich und einen ersten Höhenbereich, die durch die Anzeigeform der nach vorne gerichteten Sensorinteraktionskomponente auf der Anzeige eingenommen werden, umfasst;
Durchsuchen (S902), basierend auf der ersten Anzeigeposition auf der Vollbildanzeige, einer Konfigurationsdatei nach einem Zielfunktionssymbol, das der nach vorne gerichteten Sensorinteraktionskomponente entspricht, wobei die Konfigurationsdatei eine Anzeigeposition auf der Vollbildanzeige eines Funktionssymbols, das mindestens einer Funktion in einem aktivierten Zustand entspricht, und eine zweite Anzeigeposition des Zielfunktionssymbols auf der Vollbildanzeige umfasst, die einen zweiten Breitenbereich und einen zweiten Höhenbereich, die durch das Zielfunktionssymbol auf der Anzeige eingenommen werden, umfasst, und sowohl eine Differenz zwischen dem zweiten Breitenbereich und
dem ersten Breitenbereich als auch eine Differenz zwischen dem zweiten Höhenbereich und dem ersten Höhenbereich innerhalb angegebener Bereiche liegen; und
Anzeigen (S903) eines verarbeiteten Zielfunktionssymbols auf der Vollbildanzeige, wobei das verarbeitete Zielfunktionssymbol die zweite Anzeigeposition auf der Vollbildanzeige einnimmt und eine Anzeigeform des verarbeiteten Zielfunktionssymbols dieselbe ist wie die Anzeigeform der nach vorne gerichteten Sensorinteraktionskomponente auf der Vollbildanzeige.

2. Verfahren nach Anspruch 1, wobei die nach vorne gerichtete
Sensorinteraktionskomponente eine nach vorne gerichtete Kamera, einen Empfänger, einen Lichtsensor und einen Abstandssensor umfasst.

3. Verfahren nach Anspruch 1 oder 2, das ferner umfasst:
Erhalten einer Farbe und/oder einer Helligkeit einer Benutzeroberfläche, die aktuell auf der Vollbildanzeige angezeigt wird; und
Anpassen einer Anzeigefarbe und/oder einer Anzeigehelligkeit an der ersten Anzeigeposition an eine Farbe und/oder eine Helligkeit, die dieselbe Farbe und/oder dieselbe Helligkeit der aktuell auf der Vollbildanzeige angezeigten Benutzeroberfläche sind oder ist.

4. Elektronische Vorrichtung (100), wobei die elektronische Vorrichtung mindestens eine nach vorne gerichtete Sensorinteraktionskomponente (101), eine Vollbildanzeige, einen oder mehrere Prozessoren (110), einen Speicher (120) und ein oder mehrere Computerprogramme umfasst, wobei
die Vollbildanzeige konfiguriert ist zum: Anzeigen einer Anzeigeform der nach vorne gerichteten Sensorinteraktionskomponente auf der Vollbildanzeige und Anzeigen eines Funktionssymbols und/oder eines Texts jeder Funktion der elektronischen Vorrichtung; und das eine oder die mehreren Computerprogramme in dem Speicher gespeichert sind, das eine oder die mehreren Computerprogramme Anweisungen umfassen, und wenn die Anweisungen durch den einen oder die mehreren Prozessoren aufgerufen und ausgeführt werden, die elektronische Vorrichtung die folgenden Schritte durchführt:
Erhalten einer ersten Anzeigeposition der Anzeigeform der nach vorne gerichteten Sensorinteraktionskomponente auf der Vollbildanzeige, wobei die erste Anzeigeposition einen ersten Breitenbereich und einen ersten Höhenbereich, die durch die Anzeigeform der nach vorne gerichteten Sensorinteraktionskomponente auf der Anzeige eingenommen werden, umfasst;
Durchsuchen, basierend auf der ersten Anzeigeposition auf der Vollbildanzeige, einer Konfigurationsdatei nach einem Zielfunktionssymbol, das der nach vorne gerichteten Sensorinteraktionskomponente entspricht, wobei die Konfigurationsdatei eine Anzeigeposition auf der Vollbildanzeige eines Funktionssymbols, das mindestens einer Funktion in einem aktivierten Zustand entspricht, und eine zweite Anzeigeposition des Zielfunktionssymbols auf der Vollbildanzeige umfasst, die einen zweiten Breitenbereich und einen zweiten Höhenbereich, die durch das Zielfunktionssymbol auf der Anzeige eingenommen werden, umfasst, und sowohl eine Differenz zwischen dem zweiten Breitenbereich und dem ersten Breitenbereich als auch eine Differenz zwischen dem zweiten Höhenbereich und dem ersten Höhenbereich innerhalb angegebener Bereiche liegen; und
Anzeigen eines verarbeiteten Zielfunktionssymbols auf der Vollbildanzeige, wobei eine Anzeigeposition des verarbeiteten Zielfunktionssymbols die zweite Anzeigeposition auf der Vollbildanzeige einnimmt und eine Anzeigeform des verarbeiteten Zielfunktionssymbols dieselbe ist wie die Anzeigeform der nach vorne gerichteten Sensorinteraktionskomponente auf der Vollbildanzeige.

5. Elektronische Vorrichtung nach Anspruch 4, wobei die nach vorne gerichtete Sensorinteraktionskomponente eine nach vorne gerichtete Kamera, einen Empfänger, einen Lichtsensor und einen Abstandssensor umfasst.

6. Elektronische Vorrichtung nach Anspruch 4 oder 5, wenn die Anweisungen durch den einen oder die mehreren Prozessoren aufgerufen und ausgeführt werden, die elektronische Vorrichtung ferner die folgenden Schritte durchführt:
Erhalten einer Farbe und/oder einer Helligkeit einer Benutzeroberfläche, die aktuell auf der Vollbildanzeige angezeigt wird; und
Anpassen einer Anzeigefarbe und/oder einer Anzeigehelligkeit an der ersten Anzeigeposition an eine Farbe und/oder eine Helligkeit, die dieselbe Farbe und/oder dieselbe Helligkeit der aktuell auf der Vollbildanzeige angezeigten Benutzeroberfläche sind oder ist.

7. Computerspeicherungsmedium, das Computeranweisungen umfasst, wobei, wenn die Computeranweisungen auf einer elektronischen Vorrichtung laufengelassen werden, die elektronische Vorrichtung aktiviert wird, um das Oberflächenanzeigeverfahren nach einem der Ansprüche 1 bis 3 durchzuführen.

8. Programmprodukt, wobei, wenn das Programmprodukt auf einem Computer laufengelassen wird, der Computer aktiviert wird, um das Oberflächenanzeigeverfahren nach einem der Ansprüche 1 bis 3 durchzuführen.

## Revendications

1. Procédé d'affichage d'interface, appliqué à un dispositif électronique d'unité d'affichage plein écran, et comprenant :
l'obtention (S901) d'une première position d'affichage d'une forme d'affichage d'un composant d'interaction de capteur orienté vers l'avant sur une unité d'affichage plein écran, dans lequel la première position d'affichage comprend une première plage de largeur et une première plage de hauteur qui sont occupées par la forme d'affichage du composant d'interaction de capteur orienté vers l'avant sur l'unité d'affichage ;
la recherche (S902), sur la base de la première position d'affichage sur l'unité d'affichage plein écran, d'un fichier de configuration pour une icône de fonction cible correspondant au composant d'interaction de capteur orienté vers l'avant, dans lequel le fichier de configuration comprend une position d'affichage, sur l'unité d'affichage plein écran, d'une icône de fonction correspondant à au moins une fonction dans un état activé, et une seconde position d'affichage de l'icône de fonction cible sur l'unité d'affichage plein écran qui comprend une seconde plage de largeur et une seconde plage de hauteur qui sont occupées par l'icône de fonction cible sur l'unité d'affichage et à la fois une différence entre la seconde plage de largeur et la première plage de largeur et une différence entre la seconde plage de hauteur et la première plage de hauteur se situent dans des plages spécifiées ; et
l'affichage (S903) d'une icône de fonction cible traitée sur l'unité d'affichage plein écran, dans lequel l'icône de fonction cible traitée occupe la seconde position d'affichage sur l'unité d'affichage plein écran, et une forme d'affichage de l'icône de fonction cible traitée est la même que la forme d'affichage du composant d'interaction de capteur orienté vers l'avant sur l'unité d'affichage plein écran.

2. Procédé selon la revendication 1, dans lequel le composant d'interaction de capteur orienté vers l'avant comprend une caméra orientée vers l'avant, un récepteur, un capteur de lumière, et un capteur de distance.

3. Procédé selon la revendication 1 ou 2, comprenant en outre :
l'obtention d'une couleur et/ou d'une luminosité d'une interface utilisateur actuellement affichée sur l'unité d'affichage plein écran ; et
l'ajustement d'une couleur d'affichage et/ou d'une luminosité d'affichage au niveau de la première position d'affichage à une couleur et/ou à une luminosité qui est ou sont identiques à la couleur et/ou à la luminosité de l'interface utilisateur actuellement affichée sur l'unité d'affichage plein écran.

4. Dispositif électronique (100), dans lequel le dispositif électronique comprend au moins un composant d'interaction de capteur orienté vers l'avant (101), une unité d'affichage plein écran, un ou plusieurs processeurs (110), une mémoire (120), et un ou plusieurs programmes informatiques, dans lequel
l'unité d'affichage plein écran est configurée pour : afficher une forme d'affichage du composant d'interaction de capteur orienté vers l'avant sur l'unité d'affichage plein écran, et afficher une icône de fonction et/ou un texte de chaque fonction du dispositif électronique ; et le ou les programmes informatiques sont stockés dans la mémoire, le ou les programmes informatiques comprennent des instructions, et lorsque les instructions sont invoquées et exécutées par le ou les processeurs, le dispositif électronique effectue les étapes suivantes :
l'obtention d'une première position d'affichage de la forme d'affichage du composant d'interaction de capteur orienté vers l'avant sur l'unité d'affichage plein écran, dans lequel la première position d'affichage comprend une première plage de largeur et une première plage de hauteur qui sont occupées par la forme d'affichage du composant d'interaction de capteur orienté vers l'avant sur l'unité d'affichage ;
la recherche, sur la base de la première position d'affichage sur l'unité d'affichage plein écran, d'un fichier de configuration pour une icône de fonction cible correspondant au composant d'interaction de capteur orienté vers l'avant, dans lequel le fichier de configuration comprend une position d'affichage, sur l'unité d'affichage plein écran,
d'une icône de fonction correspondant à au moins une fonction dans un état activé, et une seconde position d'affichage de l'icône de fonction cible sur l'unité d'affichage plein écran qui comprend une seconde plage de largeur et une seconde plage de hauteur qui sont occupées par l'icône de fonction cible sur l'unité d'affichage, et à la fois une différence entre la seconde plage de largeur et la première plage de largeur et une différence entre la seconde plage de hauteur et la première plage de hauteur se situent dans des plages spécifiées ; et
l'affichage d'une icône de fonction cible traitée sur l'unité d'affichage plein écran, dans lequel une position d'affichage de l'icône de fonction cible traitée occupe la seconde position d'affichage sur l'unité d'affichage plein écran et une forme d'affichage de l'icône de fonction cible traitée est la même que la forme d'affichage du composant d'interaction de capteur orienté vers l'avant sur l'unité d'affichage plein écran.

5. Dispositif électronique selon la revendication 4, dans lequel le composant d'interaction de capteur orienté vers l'avant comprend une caméra orientée vers l'avant, un récepteur, un capteur de lumière, et un capteur de distance.

6. Dispositif électronique selon la revendication 4 ou 5, lorsque les instructions sont invoquées et exécutées par le ou les processeurs, le dispositif électronique effectue en outre les étapes suivantes :
l'obtention d'une couleur et/ou d'une luminosité d'une interface utilisateur actuellement affichée sur l'unité d'affichage plein écran ; et
l'ajustement d'une couleur d'affichage et/ou d'une luminosité d'affichage au niveau de la première position d'affichage à une couleur et/ou à une luminosité qui est ou sont identiques à la couleur et/ou à la luminosité de l'interface utilisateur actuellement affichée sur l'unité d'affichage plein écran.

7. Support de stockage informatique, comprenant des instructions informatiques, dans lequel, lorsque les instructions informatiques sont exécutées sur un dispositif électronique, le dispositif électronique est activé pour effectuer le procédé d'affichage d'interface selon l'une quelconque des revendications 1 à 3.

8. Produit-programme, dans lequel, lorsque le produit-programme est exécuté sur un ordinateur, l'ordinateur est activé pour effectuer le procédé d'affichage d'interface selon l'une quelconque des revendications 1 à 3.
